Europäisches Patentamt

European Patent Office

Office européen des brevets

(19)

(11) Veröffentlichungsnummer: **0 184 621**
**B1**

(12) # EUROPÄISCHE PATENTSCHRIFT

(45) Veröffentlichungstag der Patentschrift:
09.12.87

(21) Anmeldenummer: 85111884.4

(22) Anmeldetag: 20.09.85

(51) Int. Cl.⁴: **B 60 H 1/00**

(54) **Heizungs- und Klimaanlage Bedienungsgerät für Kraftfahrzeuge.**

(30) Priorität: 12.12.84 DE 3445235

(43) Veröffentlichungstag der Anmeldung:
18.06.86 Patentblatt 86/25

(45) Bekanntmachung des Hinweises auf die Patenterteilung:
09.12.87 Patentblatt 87/50

(84) Benannte Vertragsstaaten:
DE FR GB IT SE

(56) Entgegenhaltungen:
DE - A - 3 239 642
GB - A - 2 094 509
US - A - 4 473 109
US - A - 4 486 837

(73) Patentinhaber: FORD-WERKE AKTIENGESELLSCHAFT,
Ottoplatz 2 Postfach 21 03 69, D-5000 Köln 21 (DE)
(84) Benannte Vertragsstaaten: DE IT SE

(73) Patentinhaber: FORD MOTOR COMPANY LIMITED,
Eagle Way, Brentwood Essex CM13 3BW (GB)
(84) Benannte Vertragsstaaten: GB

(73) Patentinhaber: FORD FRANCE SOCIETE ANONYME,
344 Avenue Napoléon Bonaparte B.P. 307, F-92506 Rueil Malmaison Cedex (FR)
(84) Benannte Vertragsstaaten: FR

(72) Erfinder: Bengsch, Helmut, A. v. Menzel-Strasse 36,
D-5024 Pulheim (DE)
Erfinder: Stutenkemper, Paul, Sperberweg 26,
D-5024 Pulheim (DE)

(74) Vertreter: Ritzkowsky, Harald, Dipl.-Ing., Ford-Werke Aktiengesellschaft Patentabteilung Z/DRP Ottoplatz 2,
D-5000 Köln 21 (DE)

ACTORUM AG

## Beschreibung

Die Erfindung bezieht sich auf ein Heizungs- und Klimaanlage Bedienungsgerät für Kraftfahrzeuge der im Oberbegriff des Patentanspruchs 1 erläuterten Art.

Aus der DE-A-30 07 407 ist ein Bedienungsgerät etwa dieser Art bekannt.

Dieses bekannte Bedienungsgerät weist den Nachteil auf, dass es eine Vielzahl von Drucktasten zum Abrufen unterschiedlicher automatischer Programme sowie zum manuellen Übersteuern dieser Programme aufweist, wodurch es am Armaturenbrett eines Kraftfahrzeuges einen erheblichen Platz beansprucht und durch die Vielzahl der Drucktasten unübersichtlich und schwierig zu bedienen wird.

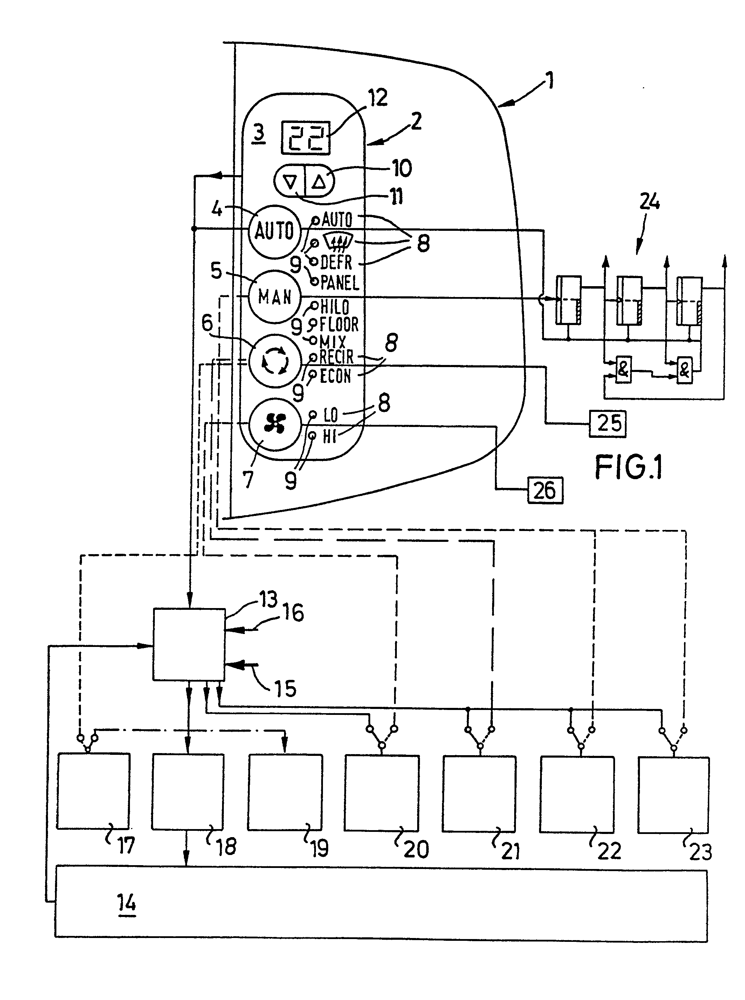

Aus der EP-A-00 21 353 ist gleichfalls ein Bediengerät etwa der im Oberbegriff erläuterten Art bekannt, wobei, wie insbesondere aus Figur 1 zu ersehen ist, nur eine bestimmte Anzahl von Programm-Drucktasten vorgesehen ist, wobei das diesen Drucktasten zugeordnete Programm durch zugeordnete Markierung in seiner etwaigen Zusammensetzung bezeichnet ist.

Dieses bekannte Bedienungsgerät weist den Nachteil auf, dass es eine manuelle Übersteuerung der programmierten Funktionen nicht ermöglicht.

Die Aufgabe der Erfindung ist es, ein Heizungs- und Klimaanlage Bedienungsgerät für Kraftfahrzeuge gemäss dem Oberbegriff des Patentanspruchs 1 derart zu verbessern, dass eine Vielzahl von programmierten Funktionen und manuellen Übersteuerungen mit einem Minimum an Drucktasten abrufbar sind, wodurch der Platzbedarf des Bedienungsgerätes verringert wird und die Übersichtlichkeit und Bedienbarkeit des Bedienungsgerätes verbessert wird.

Gemäss der Erfindung wird diese Aufgabe gelöst, indem ein Heizungs- und Klimaanlagebedienungsgerät für Kraftfahrzeuge gemäss dem Oberbegriff des Patentanspruchs 1 die im Kennzeichenteil des Patentanspruchs 1 aufgezeigten Merkmale aufweist.

In den Unteransprüchen sind weitere vorteilhafte Ausgestaltungen der Erfindung erläutert.

Dadurch, dass neben einer Drucktaste für den Automatikbetrieb für eine vielseitige manuelle Übersteuerung unterschiedlicher Funktionen nur drei Drucktasten, eine Luftverteil-Schrittschalttaste, eine Klima-Schrittschalttaste und eine Gebläse-Schrittschalttaste vorgesehen sind, wobei der Luftverteil-Schrittschalttaste eine Vielzahl von Funktionsstellungen zugeordnet sind, die durch mit entsprechenden Symbolen zusammenwirkende Leuchtdioden anzeigbar sind und der Klima- und der Gebläse-Schrittschalttaste jeweils drei Funktionsstellungen zugeordnet sind, von denen nur die jeweils vom Automatikbetrieb abweichenden Funktionsstellungen durch mit entsprechenden Symbolen zusammenwirkende Leuchtdioden angezeigt werden, wird ein Bedienungsgerät geschaffen, das einen verringerten Platzbedarf und eine verbesserte Übersichtlichkeit und Bedienbarkeit aufweist.

Das Weiterschalten der Schrittschalttasten kann hierbei durch mehrmaliges kurzes Drücken der Drucktaste erfolgen, bis die gewünschte Funktion durch die Leuchtdiode angezeigt wird, worauf nach Ausbleiben einer weiteren Tasteingabe innerhalb einer Zeitspanne von z.B. drei Sekunden die aufgerufene Funktion durch den Mikroprozessor über die Stellantriebe realisiert wird.

Dadurch, dass das Weiterschalten der Schrittschalttaste auch durch ein dauerndes Niederhalten der Drucktaste erfolgen kann, wodurch nach jeweils ca. zwei Sekunden von einer Funktion zur anderen Funktion weitergeschaltet wird, bis die Drucktaste losgelassen wird und die Leuchtdiode die angewählte Funktion anzeigt, die wieder nach Ausbleiben einer weiteren Tasteingabe realisiert wird, kann das Auffinden einer gewünschten Funktion schneller erfolgen.

Dadurch, dass diese automatische Fortschaltung jeweils in einer Funktion, der erhöhte Bedeutung zukommt, wie z.B. der Stellung „Defrost" automatisch unterbrochen wird, ist ein schnelles Auffinden dieser Funktion ohne Beobachtung der Leuchtdioden oder Zählen der Tasteingaben zu erzielen.

Dadurch, dass eine jeweils zwei benachbarten Funktionen zugeordnete Zwischenfunktion durch die gleichzeitige Beaufschlagung der den beiden benachbarten Funktionen zugeordneten mit Symbolen zusammenwirkenden Leuchtdioden anzeigbar ist, kann die Anzahl der Symbole und der mit diesen zusammenwirkenden Leuchtdioden weiter verringert und damit die Übersichtlichkeit weiter verbessert werden.

Die Erfindung wird anhand in den Zeichnungen gezeigter Ausführungsbeispiele näher erläutert.

Es zeigt:

Fig. 1 eine Ansicht eines Heizungs- und Klimaanlage Bedienungsgeräts gemäss der Erfindung in Verbindung mit einer schematischen Darstellung seiner Schrittschalt- und Steuerungsfunktionen und

Fig. 2 eine weitere Ausführungsform eines Bedienungsgerätes gemäss der Erfindung mit einer vereinfachten Symbol- und Leuchtdiodenanordnung.

In Fig. 1 ist in einem Armaturenbrett-Teilbereich 1 ein Heizungs- und Klimaanlage Bedienungsgerät 2 angeordnet.

Das Bedienungsgerät 2 besteht im wesentlichen aus einer Frontblende 3, in der mehrere Drucktasten 4, 5, 6 und 7 angeordnet sind. Den Drucktasten 4, 5, 6 und 7 sind eine Vielzahl von mit entsprechenden Beschriftungen oder Symbolen 8 zusammenwirkenden Leuchtdioden 9 zugeordnet, um die von den entsprechenden Drucktasten angewählten Funktionen anzuzeigen. In der Frontblende sind weiterhin zwei Einstelltasten 10 und 11 sowie eine Digitalanzeige 12 zur Vorwahl der Sollwert-Einstellung der Innenraumtemperatur des Kraftfahrzeuges bei Automatikbetrieb vorgesehen.

Die Drucktaste 4 ist für den Automatikbetrieb vorgesehen und steht wirkungsmässig in Verbindung mit einem Mikroprozessor 13. Der Mikroprozessor 13 steuert in Abhängigkeit von einem Temperaturfühler 14 im Fahrzeuginnenraum und der an der Digitalanzeige 12 eingestellten, gewünschten Innenraumtemperatur sowie von einem Temperaturfühler 15 für die Umgebungstemperatur und einem Temperaturfühler 16 für die Ausgangstemperatur des Heizungs-Klimaaggregates die Stellung der die Lufttemperierung, den Luftdurchsatz und die Luftverteilung bestimmenden Steuerorgane über Stellantriebe und nach unterschiedlichen Kriterien.

Bei diesen Steuerorganen handelt es sich um den Ein- und Ausschalter 17 für das Klimaaggregat (Kompressor), den Stellantrieb für die Temperatur-Mischklappe 18, das Kühlmittel-Steuerventil 19, den Gebläse-Steuerschalter 20, den Stellantrieb für die Umluftklappe 21, den Stellantrieb für die Luftverteilerklappe 22 und den Stellantrieb für die Frischluftdüsenklappe 23.

Diese Steuerorgane werden über den Mikroprozessor 13 entsprechend den einwirkenden Umgebungseinflüssen nach einem vorgegebenen Programm und vorgegebenen Kriterien gesteuert, wobei der Stellantrieb der Temperatur-Mischklappe 18 nach einem „Closed Loop-System" geregelt wird. Durch die Drucktaste 5, die als Schrittschalttaste ausgebildet ist, deren Schrittschaltfunktion bei 24 schematisch aufgezeigt ist, kann die automatische Luftverteilungsfunktion der Heizungs- und Klimaanlage manuell übersteuert werden.

Das Weiterschalten der Schrittschaltfunktion der Drucktaste 5 kann hierbei durch mehrmaliges kurzes Drücken der Drucktaste 5 erfolgen, bis die gewünschte Funktion erreicht ist, was durch die neben dem entsprechenden Symbol 8 aufleuchtende Leuchtdiode 9 gekennzeichnet wird. Wird innerhalb einer darauffolgenden Zeitspanne von z.B. drei Sekunden keine weitere Tasteingabe registriert, so wird durch den Mikroprozessor 13 und die entsprechenden Stellantriebe die ausgewählte Funktion realisiert.

Das Weiterschalten der Schrittschaltfunktion der Drucktaste 5 kann auch durch ein dauerndes Niederhalten der Drucktaste 5 erfolgen, wobei nach jeweils etwa zwei Sekunden ein selbsttätiges Fortschalten von einer Funktion zur nächsten Funktion eingeleitet wird, bis die Drucktaste 5 losgelassen wird, sobald die gewünschte Funktion durch das Aufleuchten der dem Symbol 8 zugeordneten Leuchtdiode 9 angezeigt wird. Wird darauffolgend wieder innerhalb einer Zeitspanne von drei Sekunden keine weitere Tasteingabe festgestellt, so wird die gewünschte Funktion realisiert.

Die automatische Fortschaltfunktion der Drucktaste 5 kann in einer Funktion, der erhöhte Bedeutung zukommt, wie z.B. der Funktion „Defrost", automatisch unterbrochen werden, so dass diese wichtige Funktion jeweils ohne Beobachtung der Leuchtdioden oder Zählen der Tasteingaben schnell eingestellt werden kann.

Die jeweils eingestellte Funktion kann durch Aufleuchten der dem jeweiligen Symbol 8 zugeordneten Leuchtdiode 9 angezeigt werden. Um jedoch die Anzahl der Symbole und der Leuchtdioden nicht unübersichtlich gross werden zu lassen, können Zwischenpositionen, wie z.B. mittlere Luftverteilung, durch das gleichzeitige Aufleuchten der benachbarten Leuchtdioden für diese Funktionen angezeigt werden.

Die Klima-Drucktaste 6 ist vorgesehen, um willkürlich die Funktion „Umluft" (RECIR) oder die Funktion „Klimaanlage aus" (ECON) zu übersteuern, wobei die Drucktaste 6 eine einfache Schrittschaltfunktion 25 mit drei Schaltstellungen aufweist, von denen die mittlere Schaltstellung dem Automatikbetrieb zugeordnet ist und nur die übersteuerten Funktionen durch Symbole und Leuchtdioden angezeigt werden.

Die Gebläse-Drucktaste 7 ist vorgesehen, um willkürlich die Funktion „Gebläse schwach" (LO) oder die Funktion „Gebläse stark" (HI) zu übersteuern. Die Gebläse-Drucktaste 7 ist hierbei mit einer Schrittschaltfunktion 26 mit drei Schaltstellungen versehen, von denen die mittlere dem Automatikbetrieb zugeordnet ist und nicht angezeigt wird, wohingegen die beiden übersteuerten Funktionen durch die entsprechenden Symbole in Verbindung mit den Leuchtdioden angezeigt werden.

Die technischen Erläuterungen der Steuerungsfunktionen des Mikroprozessors, der Schrittschaltfunktionen sowie der einzelnen Stellantriebe werden hier im einzelnen nicht erläutert, da es sich hierbei um dem Fachmann geläufige Techniken handelt, deren Anwendung nur in Verbindung mit der besonderen Drucktasten- und Anzeigeanordnung neu ist.

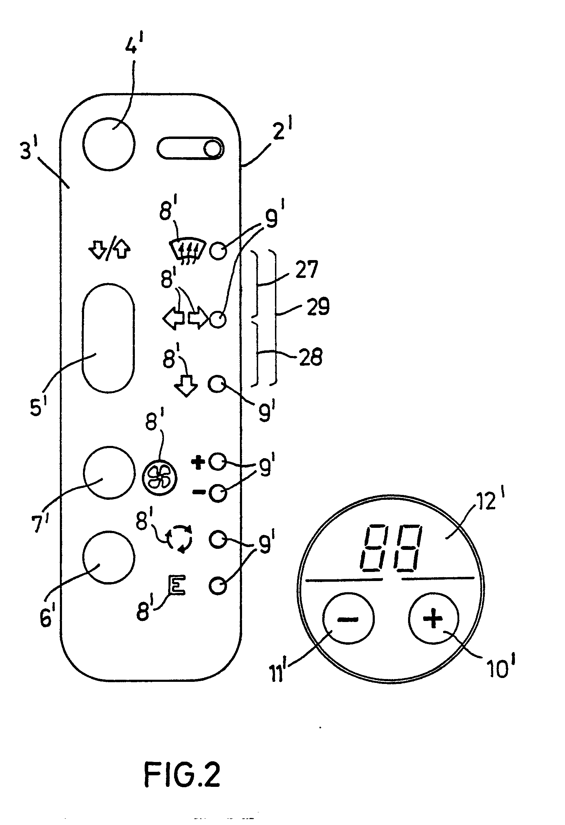

In Fig. 2 ist eine andere Ausführungsform eines Heizungs- und Klimaanlage Bedienungsgerätes gemäss der Erfindung gezeigt. Da die meisten Bauteile mit den Bauteilen der Ausführungsform nach Fig. 1 übereinstimmen, werden die gleichen nur mit einem Strich-Index versehenen Bezugszeichen verwendet.

An einer Frontblende 3' sind wieder Drucktasten 4', 5', 6' und 7' angeordnet sowie Symbole 8' und Leuchtdioden 9' vorgesehen. Weiterhin sind Einstelltasten 10' und 11' einer Digitalanzeige 12' für die Innenraumtemperatur zugeordnet.

Um die Übersichtlichkeit und Bedienbarkeit des Bedienungsgerätes weiter zu verbessern, sind hierbei die Anzahl der Symbole 8' und der Leuchtdioden 9' wesentlich verringert worden und wie durch eckige Klammern 27, 28 und 29 angedeutet, können durch gleichzeitiges Beaufschlagen zweier benachbarter Leuchtdioden entsprechende Zwischenfunktionen angezeigt werden.

**Patentansprüche**

1. Heizungs- und Klimaanlage Bedienungsgerät für Kraftfahrzeuge mit mehreren Drucktasten (4-7), von denen zumindest eine einem Automatikbetrieb zugeordnet ist und wieder andere zur manuellen Übersteuerung individuell bedienbar sind und wobei die Stellung der verschiedenen, die Lufttemperierung, den Luftdurchsatz und die Luftverteilung bestimmenden Steuerorgane von einem Mikroprozessor (13) gesteuert über Stellantriebe (17-23) betätigt werden, *dadurch gekennzeichnet*, dass neben der Drucktaste für den Automatikbetrieb (4) für eine vielseitige manuelle Übersteuerung nur drei weitere Drucktasten (5, 6 und 7), in Form von Schrittschalttasten (24, 25 und 26) vorgesehen sind, wobei der Luftverteil-Schrittschalttaste (5) eine Vielzahl von manuellen Übersteuerungsfunktionen zugeordnet sind, die über entsprechende Beschriftungen bzw. Symbole (8) in Verbindung mit Leuchtdioden (9) anzeigbar sind und durch aufeinanderfolgende Tasteingabe an der Drucktaste (5) in einer vorbestimmten Aufeinanderfolge aufrufbar sind und nach Ausbleiben einer weiteren Tasteingabe innerhalb einer Zeitspanne von z.B. drei Sekunden, durch den Mikroprozessor (13) und die entsprechenden Stellantriebe (17, 18, 19, 20, 21, 22 und 23) realisiert werden, während der Klima-Schrittschalttaste (6) und der Gebläse-Schrittschalttaste (7) nur drei Schaltfunktionen zugeordnet sind, von denen die mittlere dem Automatikbetrieb zugeordnet ist und nicht angezeigt wird, wohingegen die beiden Übersteuerungsfunktionen über Symbole (8) und Leuchtdioden (9) anzeigbar sind und nach Auswahl nach einer Zeitspanne von z.B. drei Sekunden durch den Mikroprozessor und die Stellantriebe realisiert werden.

2. Bedienungsgerät nach Anspruch 1, *dadurch gekennzeichnet*, dass der Luftverteil-Schrittschalttaste (5) in ihrer Schrittschaltfunktion (24) eine automatische Fortschaltung zugeordnet ist, die bei dauerndem Niederhalten der Drucktaste (5) nach etwa zwei Sekunden jeweils von einer Funktion zur nächsten Funktion weiterschaltet, bis die Drucktaste (5) losgelassen wird, worauf die durch das Symbol (8) und die Leuchtdiode (9) angezeigte Funktion nach Ausbleiben einer weiteren Tasteingabe innerhalb einer Zeitspanne von z.B. drei Sekunden durch den Mikroprozessor und die Stellantriebe realisiert wird.

3. Bedienungsgerät nach den Ansprüchen 1 und 2, *dadurch gekennzeichnet*, dass der Luftverteil-Schrittschalttaste (5) in ihrer Schrittschaltfunktion (24) in einer Funktion, der eine erhöhte Bedeutung zukommt, wie z.B. der Funktion „Defrost", eine automatische Unterbrechung der automatischen Fortschaltfunktion zugeordnet ist, so dass ohne Beobachtung der Leuchtdioden und Zählen der Tasteingabe an der Drucktaste (5) jeweils diese Funktion schnell gewählt wird.

4. Bedienungsgerät nach den Ansprüchen 1 bis 3, *dadurch gekennzeichnet*, dass eine zwei benachbarten Übersteuerungsfunktionen zugeordnete Zwischenfunktion nicht durch eine eigene Symbol/Leuchtdioden-Anordnung (8/9) angezeigt wird, sondern durch gleichzeitige Beaufschlagung der den beiden benachbarten Funktionen zugeordneten Symbolen/Leuchtdioden (8/9) anzeigbar sind.

## Claims

1. A control unit for heating and air conditioning installations in motor vehicles, with several push-button switches (4-7), at least one of which is allotted to automatic operation and others are operative individually for manual override and where the position of the different control members which determine the attemperation, throughput and distribution of air is controlled by a microprocessor (13) via adjusting drives (17-23), characterized in that only three further push-button switches (5, 6 and 7) acting as step-by-step switches (24, 25 and 26) are provided for multiple manual override in addition to the push-button switch (4) for automatic operation, where a multitude of manual override functions, allotted to the air-distribution step-by-step switching push button (5) and indicated by corresponding inscriptions or symbols (8) in combination with light-emitting diodes (9), can be called up by successively depressing push button (5) in a predetermined sequence and are implemented by the microprocessor (13) and the appropriate adjusting drives (17, 18, 19, 20, 21, 22 and 23) in the absence of a further push-button input within a period of, e.g., three seconds, only three switching functions being allotted to the air-conditioning step-by-step switching push button (6) and the blower step-by-step switching push button (7), of which functions only the middle one is allotted to automatic operation and is not indicated, whereas the two override functions are indicated by symbols (8) and light-emitting diodes (9) and are implemented by the microprocessor and the adjusting drives after an interval of, e.g., three seconds after the choice of the function.

2. A control unit according to claim 1, characterized in that an automatic forward switching action is allotted to the air-distribution step-by-step switching push button (5) in its step switching function (24) which switch, with the push button (5) kept depressed, keeps switching from one function to the next function with about two-second intervals until the push button (5) is released, whereupon the function indicated by the symbol (8) and the light-emitting diode (9) is implemented in the absence of a further push-button input by the microprocessor and the adjusting drives within a period of, e.g., three seconds.

3. A control unit according to claims 1 and 2, characterized in that an automatic interruption of the automatic forward switching function is allotted to the air-distribution step-by-step switching push button (5) in its step switching function (24) in a function of higher significance, e.g., the "defrost" function, so that this function is always selected quickly without observing the light-emitting diodes and counting the activations of push button (5).

4. A control unit according to claims 1 through 3, characterized in that an intermediate function allotted to two adjacent override functions is not indicated by its own symbol/light-emitting diodes (8/9) arrangement but is signalled by the simultaneous activation of the symbols/light-emitting diodes (8/9) allotted to the two adjacent functions.

## Revendications

1. Dispositif de commande d'une installation de chauffage et de climatisation de véhicule automobile comprenant plusieurs touches (4-7) dont au moins une est affectée à un fonctionnement automatique tandis que d'autres peuvent être actionnées individuellement pour la commande manuelle prioritaire, et dans lequel les positions des différents organes de commande qui déterminent l'adoucissement de la température de l'air, le débit d'air et la distribution de l'air, sont actionnées par des organes de réglage (17, 23) commandés par un microprocesseur 13, caractérisé en ce qu'en dehors de la touche de marche automatique (4), il n'est prévu, pour obtenir une commande prioritaire manuelle multiple, que trois autres touches (5, 6 et 7) en forme de touches (24, 25 et 26), la touche pas-à-pas de distribution de l'air (5) assurant plusieurs fonctions de commande manuelle prioritaire qui peuvent être affichées par des inscriptions ou symboles correspondants (8) en combinaison avec des diodes électroluminescentes (9) et qui peuvent être appelées en une succession prédéterminée par des actions répétées sur la touche (5), et être réalisées en l'absence d'une nouvelle action sur la touche pendant un intervalle de temps de, par exemple, trois secondes, par le microprocesseur (13) et par les organes de réglage correspondants (17, 18, 19, 20, 21, 22 et 23) tandis que la touche pas-à-pas de climatisation (6) et la touche de soufflerie (7) n'assurent que trois fonctions de commutation, dont la fonction centrale correspond à la marche automatique et n'est pas affichée tandis que les deux fonctions à prise de priorité peuvent être affichées par des symboles (8) et des diodes électroluminescentes (9) et, après leur sélection, sont réalisées par le microprocesseur et par les organes de réglage, après écoulement d'un intervalle de temps de, par exemple, trois secondes.

2. Dispositif de commande selon la revendication 1, caractérisé en ce qu'à la touche pas-à-pas de distribution d'air (5) est associée, dans sa fonction de commutation pas à pas (24), une progression de commutation automatique qui, lorsqu'on maintient la touche (5) continuellement pressée, commute d'une fonction à la fonction suivante au bout d'environ deux secondes, jusqu'à ce que la touche (5) soit relâchée, après quoi la fonction affichée par le symbole (8) et la diode électroluminescente (9) est réalisée par le microprocesseur et par les organes de réglage en l'absence d'une autre action sur la touche au cours d'un intervalle de temps de, par exemple, trois secondes.

3. Dispositif de commande selon les revendications 1 et 2, caractérisé en ce qu'à la touche pas-à-pas de distribution d'air (5) dans sa fonction de commutation pas-à-pas (24) est associée, dans une fonction qui présente une plus grande importance comme, par exemple, la fonction «dégivrage», une interruption automatique de la progression de commutation automatique, de sorte que, sans qu'on ait à observer les diodes électroluminescentes ni à compter les actions sur la touche (5), cette fonction est sélectionnée rapidement.

4. Dispositif de commande selon les revendications 1 à 3, caractérisé en ce qu'une fonction intermédiaire associée à deux fonctions à priorité voisines est affichée non pas par un ensemble symbole/diode électroluminescente (8/9) qui lui correspond en propre, mais par l'allumage simultané des ensembles symboles/diode électroluminescente (8/9) qui correspondent aux deux fonctions voisines.

FIG.1

FIG.2